# EUROPÄISCHE PATENTANMELDUNG

(11) **EP 1 057 683 A1**
(43) Veröffentlichungstag der Anmeldung: **06.12.2000**
(21) Anmeldenummer: 00109480.4
(22) Anmeldetag: 04.05.2000
(51) Int. Cl.: B60K 31/04

(54) **Einstellung einer oberen Gangbegrenzung eines Automatikgetriebes in einem Fahrzeuggeschwindigkeitsreglungssystem**

(30) Priorität: 31.05.1999 DE 19924942
(71) Anmelder: DaimlerChrysler AG, 70567 Stuttgart (DE)
(72) Erfinder: Linden, Thomas, 70327 Stuttgart (DE)

(57) **Zusammenfassung**

Bei einem Verfahren zur Einstellung eines Automatikgetriebes in einem Fahrzeug mit Geschwindigkeits-Regelsystem werden unter Berücksichtigung von Fahrzeug-Zustandsgrößen und Fahrzeug-Betriebsgrößen Stellsignale zur Einlegung einer bestimmten Getriebe-Gangstufe zur Einhaltung einer vorgegebenen Zielgeschwindigkeit erzeugt.

Um eine Mehrzahl unmittelbar aufeinanderfolgender Schaltvorgänge bei der Deaktivierung einer oberen Gangbegrenzung zu unterbinden, wird bei Annäherung an die Zielgeschwindigkeit eine obere Gangbegrenzung mit einer Höchst-Gangstufe vorgegeben, die von der tatsächlichen Getriebe-Gangstufe nicht überschritten werden darf, wobei die Höchst-Gangstufe der oberen Gangbegrenzung um eine bestimmte Stufe erhöht wird, falls der Reglerausgang des Geschwindigkeits-Regelsystems einen ersten Regler-Korrespondenzwert überschreitet, und die obere Gangbegrenzung deaktiviert wird, falls der Reglerausgang des Geschwindigkeits-Regelsystems einen zweiten Regler-Korrespondenzwert überschreitet, der größer ist als der erste Regler-Korrespondenzwert.

## Beschreibung

Die Erfindung betrifft ein Verfahren und eine Vorrichtung zur Einstellung eines Automatikgetriebes in einem Fahrzeug mit Geschwindigkeits-Regelsystem nach dem Oberbegriff des Anspruches 1 bzw. 8 bzw. 12.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine beispielsweise in Abstands-Regelungssystemen automatisch ermittelte Höchstgeschwindigkeit nicht überschreiten darf. Bei den Begrenzer-Funktionen werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Höchstgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Der Fahrer hat bei diesem System die Möglichkeit, über die Betätigung des Beschleunigungspedals die automatische Abstands- bzw. Geschwindigkeitsregelung außer Kraft zu setzen und den Abstand zum vorausfahrenden Fahrzeug nach eigenem Wunsch einzustellen.

Aus der Druckschrift DE 195 09 492 C2 ist ein Geschwindigkeits-Regelsystem mit Begrenzerfunktion bekannt, bei dem der Fahrer eine maximal zulässige Höchstgeschwindigkeit vorgeben kann. Das Regelsystem begrenzt die Fahrzeuggeschwindigkeit selbsttätig auf die Höchstgeschwindigkeit, wenn die Betätigung des Gaspedals durch den Fahrer eine höhere Fahrzeuggeschwindigkeit als die eingestellte Höchstgeschwindigkeit ergeben würde. In diesem Fall wird unabhängig von der tatsächlichen Gaspedalstellung ein der vorgegebenen Höchstgeschwindigkeit entsprechendes Stellsignal erzeugt, das zur Einstellung des Motors und des Getriebes herangezogen wird.

Bei Verwendung derartiger Geschwindigkeits-Regelsysteme ist es beim Annähern an die Zielgeschwindigkeit zweckmäßig, die zulässige Getriebestufe, die das Automatikgetriebe einnehmen darf, auf eine Höchst-Gangstufe zu begrenzen, um zur Verbesserung des Einschwingvorgangs weitere Hochschaltungen zu unterbinden. Die Höchst-Gangstufe stellt eine obere Gangbegrenzung dar, bis zu der gemäß einem hinterlegten Schaltprogramm hochgeschaltet werden darf, die jedoch nicht überschritten werden darf. Die obere Gangbegrenzung wird wieder deaktiviert, sobald ein bestimmtes, dem Einschwingvorgang entsprechendes Zeitintervall abgelaufen ist oder wenn die Drehzahl einen erlaubten Grenzwert überschreitet. Nach Beendigung der Funktion 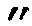 obere Gangbegrenzung" schaltet das Getriebe üblicherweise sofort bis in die höchste Gangstufe, wobei gegebenenfalls mehrere Hochschaltungen hintereinander ausgeführt werden.

Falls das Fahrzeug sich auf einer Gefällstrecke befindet und eine zulässige Höchstgeschwindigkeit überschreitet, wird nach der Deaktivierung der oberen Gangbegrenzung eine vom Regelsystem durchgeführte Hochschaltung sofort wieder zurückgenommen, Um die Fahrzeuggeschwindigkeit zu reduzieren. Innerhalb kürzester Zeit werden unmittelbar aufeinander folgend eine Hochschaltung und eine Rückschaltung durchgeführt. Diese Schaltungsdichte kann zu Irritationen des Fahrers führen.

Der Erfindung liegt das Problem zugrunde, Fahrsicherheit und Komfort bei Fahrzeugen mit Automatikgetrieben, die mit einer Geschwindigkeits-Regeleinheit ausgestattet sind, zu verbessern. Es soll insbesondere eine Mehrzahl unmittelbar aufeinanderfolgender Schaltvorgänge bei der Deaktivierung einer oberen Gangbegrenzung unterbunden werden.

Dieses Problem wird erfindungsgemäß mit den Merkmalen des Anspruches 1 bzw. 8 bzw. 12 gelöst.

Gemäß der Neuerung wird eine abgestufte Strategie bei der Aufhebung bzw. Deaktivierung der oberen Gangbegrenzung verfolgt. In Abhängigkeit des Reglerausgangs des Geschwindigkeits-Regelsystems wird eine selektive Aufhebung oder eine vollständige Aufhebung der Gangbegrenzung zugelassen. Bei der selektiven Aufhebung wird die Höchst-Gangstufe um eine bestimmte Gangstufe angehoben, zweckmäßig um den Wert eins, so daß eine Hochschaltung nur bis zu dieser neu ermittelten Höchst-Gangstufe zugelassen wird. Hierdurch wird die Zahl der Schaltvorgänge reduziert. Bei der vollständigen Aufhebung wird die obere Gangbegrenzung aufgehoben, die erlaubte Höchst-Gangstufe wird auf die maximal zulässige Gangstufe gesetzt.

Die Differenzierung in eine vollständige und eine selektive Aufhebung der oberen Gangbegrenzung hat den Vorteil, daß anstelle einer bisher üblichen Einschaltung/Ausschaltung der oberen Gangbegrenzung eine Anpassung der Gangbegrenzung auf die momentane Situation in Abhängigkeit des Reglerausgangs möglich ist. Bei einem niedrigen Wert des Reglerausgangs unterhalb eines Korrespondenzwertes verharrt die Höchst-Gangstufe der oberen Gangbegrenzung auf einem Wert, der aus einem Kennfeld in Abhängigkeit der aktuellen Gangstufe und der Motordrehzahl ermittelt wird. Bei einem mittleren Wert des Reglerausgangs, welcher zwischen zwei Korrespondenzwerten liegt, die abhängig von der Zielgeschwindigkeit und der aktuellen Gangstufe aus einem Kennfeld berechnet werden, wird die Höchst-Gangstufe um eine bestimmte Gangstufe erhöht. Bei einem hohen Wert, welcher oberhalb des höheren Korrespondenzwerts liegt, wird die Gangbegrenzung vollständig aufgehoben, so daß der Istgang des Getriebes die größtmögliche Getriebe-Gangstufe einnehmen kann.

Zweckmäßig sind in dem Kennfeld, welches der Entscheidung über Beibehaltung, selektive oder vollständige Aufhebung der oberen Gangbegrenzung zugrunde gelegt wird, mehrere Kennlinien für verschiedene Gangstufen enthalten, wobei jeweils Kennlinien für die Markierung des Überganges von Beibehaltung zu selektiver Aufhebung und für die Markierung des Übergangs zwischen selektiver und vollständiger Aufhebung der oberen Gangbegrenzung vorgesehen sind. In Abhängigkeit der eingestellten Zielgeschwindigkeit erhält man aus den Kennlinien die aktuellen, dem Vergleich mit dem Reglerausgang zugrunde liegenden Korrespondenzwerte. Der Reglerausgang wird einem der Abschnitte unterhalb des kleineren Korrespondenzwerts, zwischen beiden Korrespondenzwerten oder oberhalb des größeren Korrespondenzwerts zugeordnet.

Weitere Vorteile und zweckmäßige Ausführungsformen sind den weiteren Ansprüchen, der Figurenbeschreibung und den Zeichnungen zu entnehmen. Es zeigen:
- Fig. 1: ein Ablaufdiagramm mit den Verfahrensschritten für die Aktivierung und Deaktivierung einer oberen Gangbegrenzung,
- Fig. 2: ein Kennfeld mit Kennlinien für selektive und vollständige Aufhebung der oberen Gangbegrenzung.

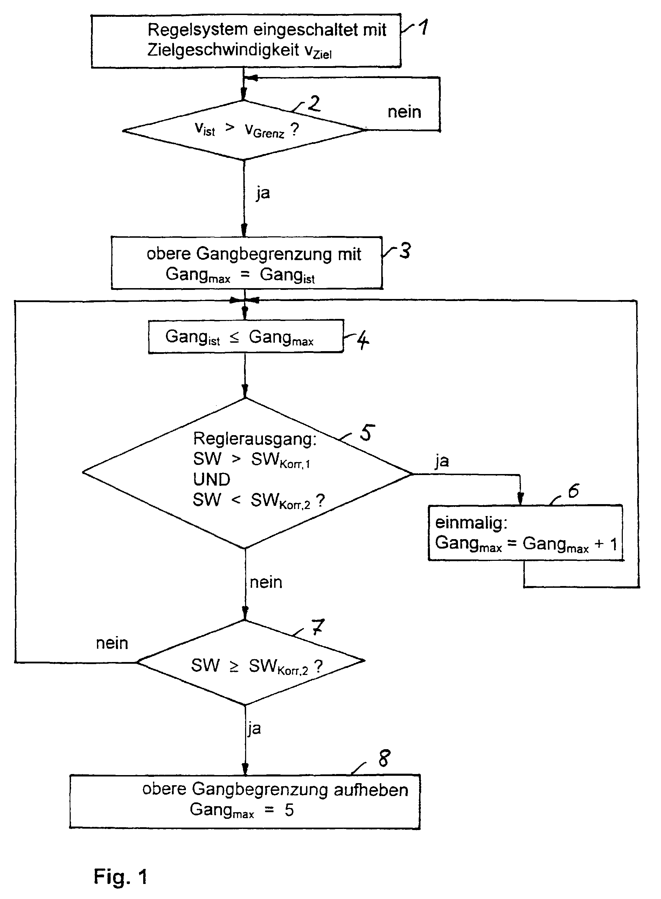

Das in Fig. 1 dargestellte Ablaufschema ist in einem Geschwindigkeits-Regelsystem eines Kraftfahrzeugs zur Einhaltung einer vorgegebenen Geschwindigkeit v_{Ziel} realisiert, die je nach Vorgabe sowohl eine nicht zu überschreitende Obergrenze innerhalb eines Geschwindigkeits-Begrenzersystems als auch eine Tempomatfunktion darstellen kann. Die Zielgeschwindigkeit kann entweder unmittelbar vom Fahrer vorgegeben oder von einem Fahrzeugsystem unter Berücksichtigung äußerer Bedingungen und Einflüsse wie Geschwindigkeitsbeschränkungen, Sichtverhältnisse, Verkehrsdichte etc. automatisch ermittelt werden. Das Regelsystem kann das auf die Straße übertragbare Antriebsmoment sowohl über das Motormoment der Brennkraftmaschine als auch über das Automatikgetriebe zur Einhaltung der Zielgeschwindigkeit beeinflussen. Im folgenden wird eine vorteilhafte Manipulation der Gangstufen im Automatikgetriebe beschrieben.

Gemäß dem Ablaufschema wird in einem Verfahrensschritt 1 zunächst das Regelsystem unter Vorgabe einer Zielgeschwindigkeit v_{Ziel} eingeschaltet.

Im Verfahrensschritt 2 erfolgt eine Abfrage, ob die aktuelle Fahrzeuggeschwindigkeit vᵢₛₜ eine Grenzgeschwindigkeit v_{Grenz} überschreitet, welche als applizierbarer Schwellenwert üblicherweise einen Wert kleiner als die Zielgeschwindigkeit v_{Ziel} einnimmt, gegebenenfalls aber auch mit dieser identisch sein kann. Sofern die aktuelle Fahrzeuggeschwindigkeit vᵢₛₜ die Grenzgeschwindigkeit v_{Grenz} noch nicht überschritten hat, wird der Nein-Verzweigung entsprechend zu einer erneuten Abfrage zurückgekehrt. Andernfalls wird der Ja-Verzweigung entsprechend zum nächsten Verfahrensschritt 3 fortgefahren, in dem eine obere Gangbegrenzung mit Höchst-Gangstufe Gangₘₐₓ aktiviert wird, die, solange die obere Gangbegrenzung aktiv ist, von der aktuellen Getriebe-Gangstufe Gangᵢₛₜ zwar erreicht, jedoch nicht überschritten werden kann. Die Höchst-Gangstufe Gangₘₐₓ der oberen Gangbegrenzung wird zweckmäßig auf die im Zeitpunkt des Überschreitens der Grenzgeschwindigkeit v_{Grenz} eingelegte Getriebe-Gangstufe Gangᵢₛₜ gesetzt.

Die Höchst-Gangstufe Gangₘₐₓ aus dem Verfahrensschritt 3 kann in einer alternativen Ausführung auch aus einem Kennfeld in Abhängigkeit der Motordrehzahl und der aktuellen Getriebe-Gangstufe Gangᵢₛₜ ermittelt werden. Weiterhin kann berücksichtigt werden, ob beim Überschreiten der Grenzgeschwindigkeit v_{Grenz} ein Schaltungswechsel stattfindet. In diesem Fall wird die obere Gangbegrenzung mit der Höchst-Gangstufe Gangₘₐₓ auf den neuen Zielgang des Getriebes gesetzt, wobei nach dem Einlegen des neuen Ganges zunächst eine bestimmte Zeit abgewartet wird, damit die Drehzahl sich stabilisieren kann. Anschließend kann aus dem Kennfeld eine neue Höchst-Gangstufe einer oberen Gangbegrenzung ermittelt werden.

Gemäß dem Verfahrensschritt 4 kann die aktuelle Getriebe-Gangstufe Gangᵢₛₜ maximal den Wert der zuvor ermittelten Höchst-Gangstufe Gangₘₐₓ einnehmen.

Im Verfahrensschritt 5 erfolgt eine Abfrage, ob der Reglerausgang SW zwischen zwei Korrespondenzwerten SW_{Korr,1} und SW_{Korr,2} liegt, wobei der letztere den ersteren übersteigt. Sofern der Reglerausgang SW des Geschwindigkeits-Regelsystems nicht in dem Intervall zwischen den Korrespondenzwerten SW_{Korr,1} und SW_{Korr,2} liegt, wird der Nein-Verzweigung entsprechend zur Abfrage gemäß Verfahrensschritt 7 fortgefahren, in dem überprüft wird, ob der Reglerausgang SW größer ist als oder gleich ist wie der obere Korrespondenzwert SW_{Korr,2}. Sofern dies ebenfalls nicht der Fall ist, muß sich der Reglerausgang SW in einem Wertebereich unterhalb des unteren Korrespondenzwertes SW_{Korr,1} befinden. In diesem Fall wird der Nein-Verzweigung des Verfahrensschrittes 7 entsprechend zum Verfahrensschritt 4 zurückgekehrt, wo in einem neuen Bearbeitungszyklus überprüft wird, ob die aktuelle Getriebe-Gangstufe Gangᵢₛₜ kleiner ist als oder gleich ist wie die vorgegebene Höchst-Gangstufe Gangₘₐₓ.

Liegt der Wert des Reglerausganges innerhalb des in Verfahrensschritt 5 abgefragten Intervalls zwischen unterem Korrespondenzwert SW_{Korr,1} und oberem Korrespondenzwert SW_{Korr,2}, so wird der Ja-Verzweigung entsprechend zum Verfahrensschritt 6 fortgefahren, in welchem bei erstmaligem Durchlaufen dieses Verfahrensschrittes die Höchst-Gangstufe Gangₘₐₓ der oberen Gangbegrenzung um eine Gangstufe heraufgesetzt wird. Anschließend erfolgt eine erneute Begrenzung der aktuellen Getriebe-Gangstufe Gangᵢₛₜ auf die Höchst-Gangstufe Gangₘₐₓ gemäß Verfahrensschritt 4 und anschließender Überprüfung und Zuordnung des Reglerausganges SW in den entsprechenden Wertebereich. Die Erhöhung der Höchst-Gangstufe Gangₘₐₓ um eine Gangstufe gemäß Verfahrensschritt 6 stellt eine selektive Aufhebung der oberen Gangbegrenzung dar.

Es kann gegebenenfalls zweckmäßig sein, bei selektiver Aufhebung der oberen Gangbegrenzung die Höchst-Gangstufe Gangₘₐₓ um mehr als eine Gangstufe anzuheben.

Wird im Verfahrensschritt 5 festgestellt, daß der Wert des Reglerausganges SW außerhalb des Intervalles zwischen unterem und oberem Korrespondenzwert SW_{Korr,1} bzw. SW_{Korr,2} liegt und wird anschließend im Verfahrensschritt 7 festgestellt, daß der Regler-Ausgangswert SW größer ist als oder gleich ist wie der obere Korrespondenzwert SW_{Korr,2}, wird der Ja-Verzweigung des Verfahrensschrittes 7 entsprechend zum Schritt 8 fortgefahren, gemäß dem die obere Gangbegrenzung vollständig aufgehoben wird. Die zulässige Höchst-Gangstufe Gangₘₐₓ wird in diesem Fall auf den maximal möglichen Wert, in der Regel fünf, heraufgesetzt.

Falls bei bereits aktivierter oberer Gangbegrenzung eine Rückschaltung im Getriebe vorgenommen wird, erfolgt nach Abschluß des Schaltvorganges sowie gegebenenfalls unter Berücksichtigung einer sich anschließenden Wartezeit in einem neuen Bearbeitungszyklus eine neuerliche Berechnung einer Höchst-Gangstufe Gangₘₐₓ.

Das Kennfeld zur Bestimmung der Höchst-Gangstufe ist zweckmäßig so aufgebaut, daß die Höchst-Gangstufe nicht kleiner werden kann als die aktuell eingelegte Getriebe-Gangstufe Gangᵢₛₜ.

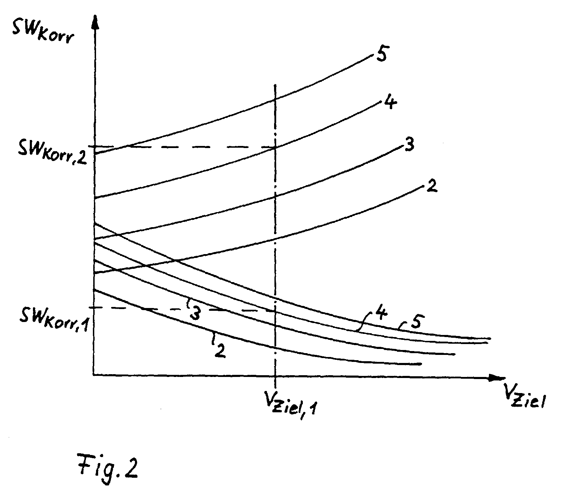

Aus dem in Fig. 2 dargestellten Kennfeld können der untere Korrespondenzwert SW_{Korr,1} sowie der obere Korrespondenzwert SW_{Korr,2} in Abhängigkeit der eingestellten Zielgeschwindigkeit v_{Ziel} sowie der aktuellen Getriebe-Gangstufe Gangᵢₛₜ ermittelt werden. In Fig. 2 sind vier mit zunehmender Zielgeschwindigkeit ansteigende obere Kennlinien eingetragen, von denen jeweils eine einer Getriebe-Gangstufe 2, 3, 4 bzw. 5 zugeordnet ist. Diese ansteigenden Kennlinien repräsentieren obere Korrespondenzwerte, bei deren Überschreitung eine vollständige Aufhebung der oberen Gangbegrenzung erfolgt.

In Fig. 2 sind außerdem vier mit zunehmender Zielgeschwindigkeit v_{Ziel} abfallende untere Kennlinien eingetragen, die wiederum jeweils einer aktuellen Getriebe-Gangstufe 2, 3, 4, 5 zugeordnet sind. Diese abfallenden Kennlinien repräsentieren untere Korrespondenzwerte SW_{Korr,1}, bei deren Unterschreitung die obere Gangbegrenzung vollständig aufrechterhalten bleibt. Die unteren, der selektiven bzw. vollständigen Aufhebung der oberen Gangbegrenzung zugeordneten Kennlinien, markieren eine niedrigeres Reglerniveau und liegen außerdem enger beieinander als die oberen, mit zunehmender Zielgeschwindigkeit aufsteigenden Kennlinien.

Bei Vorgabe einer Zielgeschwindigkeit v_{Ziel,1} sowie einer beispielhaft eingelegten Getriebe-Gangstufe Gangᵢₛₜ = 4 ergeben sich die mit strichlierter, waagerechter Linie eingetragenen Korrespondenzwerte SW_{Korr,1} sowie SW_{Korr,2}. In dem Geschwindigkeits-Regelsystem wird nun überprüft, ob der Reglerausgang des Regelsystems unterhalb des unteren Korrespondenzwertes SW_{Korr,1}, zwischen unterem und oberen Korrespondenzwert oder oberhalb des oberen Korrespondenzwertes SW_{Korr,2} liegt. Im ersten Fall wird die aktuell geltende obere Gangbegrenzung beibehalten, im zweiten Fall erfolgt eine selektive Aufhebung der oberen Gangbegrenzung, bei der die Höchst-Gangstufe um eine Gangstufe heraufgesetzt wird, im dritten Fall erfolgt eine vollständige Aufhebung der oberen Gangbegrenzung, bei der bis zur maximal möglichen Getriebe-Gangstufe heraufgeschaltet werden kann.

## Patentansprüche

1. Verfahren zur Einstellung eines Automatikgetriebes in einem Fahrzeug mit Geschwindigkeits-Regelsystem, wobei unter Berücksichtigung von Fahrzeug-Zustandsgrößen und Fahrzeug-Betriebsgrößen Steilsignale zur Einlegung einer bestimmten Getriebe-Gangstufe zur Einhaltung einer vorgegebenen Zielgeschwindigkeit (v_{Ziel}) erzeugt werden,
**dadurch gekennzeichnet**,
- daß bei Annäherung an die Zielgeschwindigkeit eine obere Gangbegrenzung mit einer Höchst-Gangstufe (Gangₘₐₓ) vorgegeben wird, die von der tatsächlichen Getriebe-Gangstufe (Gangᵢₛₜ) nicht überschritten werden darf,
- die Höchst-Gangstufe (Gangₘₐₓ) der oberen Gangbegrenzung um eine bestimmte Stufe erhöht wird, falls der Reglerausgang (SW) des Geschwindigkeits-Regelsystems einen ersten Regler-Korrespondenzwert (SW_{Korr,1}) überschreitet,
- daß die obere Gangbegrenzung deaktiviert wird, falls der Reglerausgang (SW) des Geschwindigkeits-Regelsystems einen zweiten Regler-Korrespondenzwert (SW_{Korr,2}) überschreitet, der größer ist als der erste Regler-Korrespondenzwert (SW_{Korr,1}).

2. Verfahren nach Anspruch 1,
**dadurch gekennzeichnet**,
daß die Höchst-Gangstufe (Gangₘₐₓ) für den Fall, daß der Reglerausgang (SW) zwischen dem ersten und dem zweiten Korrespondenzwert (SW_{Korr,1}, SW_{Korr,2}) liegt, um eine Gangstufe erhöht wird.

3. Verfahren nach Anspruch 1 oder 2,
**dadurch gekennzeichnet**,
daß der erste und der zweite Korrespondenzwert (SW_{Korr,1}, SW_{Korr,2}) aus einem Kennfeld in Abhängigkeit von der Zielgeschwindigkeit (v_{Ziel}) und der aktuellen Getriebe-Gangstufe (Gangᵢₛₜ) ermittelt wird.

4. Verfahren nach Anspruch 3,
**dadurch gekennzeichnet**,
daß in dem Kennfeld Kennlinien für verschiedene Gangstufen (Gangᵢₛₜ) enthalten sind, wobei Kennlinien für selektive Aufhebung zur Erhöhung der zulässigen Höchst-Gangstufe (Gangₘₐₓ) und Kennlinien für vollständige Aufhebung der oberen Gangbegrenzung vorgesehen sind.

5. Verfahren nach Anspruch 4,
**dadurch gekennzeichnet**,
daß die Kennlinien für selektive Aufhebung mit zunehmender Zielgeschwindigkeit (v_{Ziel}) abfallen.

6. Verfahren nach Anspruch 4 oder 5,
**dadurch gekennzeichnet**,
daß die Kennlinien für vollständige Aufhebung mit zunehmender Zielgeschwindigkeit (v_{Ziel}) ansteigen.

7. Verfahren nach einem der Ansprüche 4 bis 6,
**dadurch gekennzeichnet**,
daß die Kennlinien mit zunehmender Getriebe-Gangstufe (Gangᵢₛₜ) ansteigen.

8. Verfahren zur Einstellung eines Automatikgetriebes in einem Fahrzeug mit Geschwindigkeits-Regelsystem, insbesondere Verfahren nach einem der vorhergehenden Ansprüche, wobei unter Berücksichtigung von Fahrzeug-Zustandsgrößen und Fahrzeug-Betriebsgrößen Stellsignale zur Einlegung einer bestimmten Getriebe-Gangstufe zur Einhaltung einer vorgegebenen Zielgeschwindigkeit (v_{Ziel}) erzeugt werden,
**dadurch gekennzeichnet**,
- daß bei Annäherung an die Zielgeschwindigkeit eine obere Gangbegrenzung mit einer Höchst-Gangstufe (Gangₘₐₓ) vorgegeben wird, die von der tatsächlichen Getriebe-Gangstufe (Gangᵢₛₜ) nicht überschritten werden darf,
- daß die Höchst-Gangstufe (Gangₘₐₓ) in Abhängigkeit der Motordrehzahl und der aktuellen Getriebe-Gangstufe (Gangᵢₛₜ) ermittelt wird.

9. Verfahren nach Anspruch 8,
**dadurch gekennzeichnet**,
daß für den Fall, daß bei Überschreitung der Grenzgeschwindigkeit (v_{Grenz}) ein Schaltungswechsel stattfindet, die Höchst-Gangstufe (Gangₘₐₓ) auf den neuen Zielgang des Getriebes gesetzt wird.

10. Verfahren nach Anspruch 9,
**dadurch gekennzeichnet**,
daß die Höchst-Gangstufe (Gangₘₐₓ) für eine gegebene Haltezeit auf dem Zielgang des Getriebes gehalten wird.

11. Verfahren nach Anspruch 10,
**dadurch gekennzeichnet**,
daß nach Ablauf der Haltezeit eine neue Höchst-Gangstufe (Gangₘₐₓ) ermittelt wird.

12. Vorrichtung zur Einstellung eines Automatikgetriebes in einem Fahrzeug mit Geschwindigkeits-Regelsystem, insbesondere Vorrichtung zur Durchführung des Verfahrens nach einem der Ansprüche 1 bis 11, wobei in dem Geschwindigkeits-Regelsystem, in welchem die dem vom Fahrer über die Ist-Gaspedalstellung (Gasᵢₛₜ) angeforderten Motormoment entsprechende Geschwindigkeit (vᵢₛₜ) mit der vorgegebenen Zielgeschwindigkeit (v_{Ziel}) vergleichbar ist, unter Berücksichtigung von Fahrzeug-Zustandsgrößen und Fahrzeug-Betriebsgrößen Stellsignale zur Einlegung einer bestimmten Gangstufe erzeugbar und dem Automatikgetriebe zuführbar sind,
**dadurch gekennzeichnet**,
- daß bei Überschreitung eines Geschwindigkeits-Schwellenwertes (v_{Grenz}) ein Getriebe-Stellsignal erzeugbar ist, gemäß dem eine Höchst-Gangstufe (Gangₘₐₓ) einer oberen Gangbegrenzung nicht zu überschreiten ist,
- daß der Reglerausgang (SW) des Geschwindigkeits-Regelsystems mit einem Korrespondenzwert (SW_{Korr,1}, SW_{Korr,2}) vergleichbar ist, wobei
• ein die Höchst-Gangstufe (Gangₘₐₓ) der oberen Gangbegrenzung um eine Stufe erhöhendes Stellsignal erzeugbar ist, falls der Reglerausgang (SW) des Geschwindigkeits-Regelsystems einen ersten Regler-Korrespondenzwert (SW_{Korr,1}) überschreitet,
• ein die obere Gangbegrenzung deaktivierendes Stellsignal erzeugbar ist, falls der Reglerausgang (SW) des Geschwindigkeits-Regelsystems einen zweiten Regler-Korrespondenzwert (SW_{Korr,2}) überschreitet, der größer ist als der erste Korrespondenzwert (SW_{Korr,1}).
